Europäisches Patentamt

European Patent Office

Office européen des brevets

(11) Publication number: **0 553 442 A1**

## EUROPEAN PATENT APPLICATION

(21) Application number: **92120736.1**

(22) Date of filing: **04.12.92**

(51) Int. Cl.⁵: **C08K 5/54**, B32B 25/14

(30) Priority: **17.12.91 US 808861**

(43) Date of publication of application:
**04.08.93 Bulletin 93/31**

(84) Designated Contracting States:
**DE FR GB IT**

(71) Applicant: **POLYSAR RUBBER CORPORATION**
**P.O.Box 3001, 1265 Vidal Street South**
**Sarnia, Ontario N7T 7M2(CA)**

(72) Inventor: **Marshall, Alexander James**
**Aggerstrasse 10**
**W-4047 Dormagen(DE)**

(74) Representative: **Braun, Rolf, Dr. et al**
**Bayer AG Konzernverwaltung RP**
**Patentabteilung**
**W-5090 Leverkusen, Bayerwerk (DE)**

(54) **Improved hydrogenated nitrile rubber laminates.**

(57) A process is provided for improving in an at least two layer laminate the adhesion of a first rubbery layer containing hydrogenated butadiene-acrylonitrile polymer to a second rubbery layer containing one of butadiene-acrylonitrile rubber, hydrogenated butadiene-acrylonitrile polymer or fluoroelastomer polymer by incorporating into said first rubbery layer an adhesion improving compound selected from bis[alkoxysilyl-alkyl]-tetrasulphides and bis[alkoxysilyl-aryl]-tetrasulphides.

EP 0 553 442 A1

## BACKGROUND OF THE INVENTION

This invention is directed to rubber containing laminates wherein at least two layers of rubbery compositions are vulcanized in contact with each other to produce the laminate and wherein an adhesion improving compound is incorporated in one of said layers.

## DESCRIPTION OF THE PRIOR ART

The bonding of two or more layers of rubbery materials to each other to form laminates is a well known principle in the industry. When the final product is exposed on one side of the laminate to one type of deleterious environment, for example gasoline, and on the other side of the laminate to a different type of deleterious environment, for example high temperature, it is necessary to use different types of polymers to achieve the balance of properties necessary. The use of different types of polymers in the layers of a laminate usually results in problems of achieving adhesion of one layer to another. U.S. Patents 4 457 799 and 4 522 852 describe the use of a polysulphidic silane compound to achieve improved adhesion of a fluoroelastomer compound to a butadiene-acrylonitrile polymer compound.

## SUMMARY OF THE INVENTION

I have now discovered a process for improving the adhesive strength of a hydrogenated butadiene-acrylonitrile polymer layer to other rubbery polymer layers by incorporating into the hydrogenated butadiene-acrylonitrile polymer layer, prior to vulcanization of the layers in contact with each other, an adhesion improving compound selected from bis[alkoxysilyl-alky]-tetrasulphides and bis[alkoxysilyl-aryl]-tetrasulphides.

In accordance with my invention, there is provided a process for improving the adhesive strength of a first rubbery layer to a second rubbery layer in an at least two layer vulcanized laminate, characterized in that said first rubbery layer contains as the rubbery component hydrogenated butadiene-acrylonitrile polymer and said second rubbery layer contains as the rubbery component a rubber selected from the group consisting of nitrile polymer, hydrogenated nitrile polymer and fluoroelastomer polymer, wherein there is added to said first rubbery layer prior to vulcanization of the layers in contact with each other an adhesion improving compound selected from the group consisting of bis[alkoxysilyl-alky]-tetrasulphides and bis[alkoxysilyl-aryl]-tetrasulphides.

## DETAILED DESCRIPTION OF THE INVENTION

The hydrogenated butadiene-acrylonitrile polymers, also known as hydrogenated nitrile polymers, useful in my invention are butadiene-acrylonitrile polymers prepared by the well known emulsion free radical polymerization process and containing from about 15 to about 50 weight per cent of acrylonitrile which have been hydrogenated such that a major proportion of the carbon-carbon double bonds have been saturated such that the hydrogenated butadiene-acrylonitrile polymers contain from about 10 to about 0.1 mole per cent of unsaturation. Such hydrogenation processes are described in U.S. Patents 4 503 196, 4 581 417 and 4 384 081. The butadiene-acrylonitrile polymers, also referred to as nitrile polymers, used in this invention are the well known materials prepared by emulsion free radical polymerization process and contain from about 15 to about 50 weight per cent of acrylonitrile the balance being butadiene. The fluoroelastomer polymers used in the present invention are those based on vinylidene fluoride and hexafluoropropylene and optionally may contain other monomers such as tetrafluoroethylene, perfluoromethylvinyl ether and ethylenically unsaturated olefins. Such polymers are well known commercially and are generally produced by high pressure agueous emulsion polymerization of the monomers using fluorocarbon emulsifiers, persulphate initiators and various molecular weight control agents.

The adhesion improving compound that I use is selected from the group consisting of bis[alkoxysilyl-alky]-tetrasulphides and bis[alkoxysilyl-aryl]-tetrasulphides. Commercially available examples of such tetrasulphides include bis-[3-(triethoxysilyl)-propyl]-tetrasulphide and bis-[triethoxysilyl-ethyltolylene]-tetrasulphide. The amount of tetrasulphide compound that I add is from about 2 to about 10 parts by weight per 100 parts by weight of hydrogenated butadiene-acrylonitrile polymer in said first rubbery layer.

The layers used to form the laminate will be compounded with materials commonly used in the rubber industry and with vulcanization active agents. Typically, the layers will contain from about 10 to about 150 parts by weight, preferably from about 20 to about 70 parts by weight per 100 parts by weight of polymer of one or more carbon black; from about 2 to about 6 parts by weight per 100 parts by weight of polymer of magnesium oxide, and zinc oxide and from about 0.5 to about 2 parts by weight per 100 parts by weight of polymer of stearic acid when nitrile polymer and hydrogenated nitrile polymers are used and from about 2 to about 4 parts by weight per 100 parts by weight of polymer of magnesium oxide and from about 4 to about 8 parts by weight per 100 parts by weight of polymer of calcium hydroxide when fluoroelastomer polymers are used; plasticizers in amounts from 0 to about 15 parts by weight per 100 parts by weight of polymer may also be present; one or more antioxidants in amounts from 0 to about 2 parts by weight per 100 parts by weight of polymer may also be present; and finally vulcanization agents are present. Vulcanization may be for the nitrile and hydrogenated nitrile polymers with an organic peroxide or with a sulphur system and for the fluoroelastomer polymers with bisphenol curatives or with an organic peroxide and coagents such as tri-allyl cyanurate. Typical organic peroxides, with or without curable coagents, include dicumyl peroxide, benzoyl peroxide, 2,5-bis(tert-butylperoxy)-2,5-dimethyl hexane and the like. Typical sulphur systems include sulphur in combination with organosulphur accelerators such as benzothiazyl disulphide, tetramethyl thiuram disulphide, tetramethyl thiuram monosulphide, benzothiazyl-2-cyclohexyl sulphenamide, diphenyl guanidine and the like. The quantity of the vulcanization agent or agents used is well known in the industry and depends on the combination of such materials actually used.

The layers of the laminate are formed by conventional procedures including the mixing of the polymer with the compounding ingredients either by mixing in an internal mixer or on a rubber mill and by forming into a sheet of the required shape and thickness. The layers are then brought into contact with each other, usually under some pressure and the laminate is then vulcanized by heating at a temperature of about 150°C to about 180°C for a time of from about 10 to about 60 minutes.

The adhesion of one layer of the laminate to another layer was determined as follows. A sheet of each compounded polymer was prepared, size 15 cm by 15 cm and 0.25 cm thick. Each sheet was placed over a 15 cm by 15 cm nylon fabric sheet which had 4 slots 1 cm by 10 cm cut out, and plastic tabs were placed at one side between the nylon fabric sheet and each sheet of compounded polymer. A sheet of heavy woven cotton backing was then placed on top of and beneath the assembly which was then placed in a pre-heated mold at constant applied pressure for the desired vulcanization time. Following vulcanization, the assembly was removed, allowed to cool to room temperature and tested within about 24 hours. The adhesion test required that the assembly be separated to provide the two layer laminate with a portion of each layer separated from the other layer by the plastic tabs. The two ends were placed in a tensile test machine at an angle of 180° and were pulled apart at 50 mm/minute and the peeling force was recorded as well as the nature of the adhesive failure.

One preferred embodiment of my invention involves the use in the first rubbery layer of hydrogenated butadiene-acrylonitrile polymer which contains from about 1 to about 10, most preferably from about 1 to about 7, mole per cent of residual carbon-carbon double bond unsaturation, the use in the second rubbery layer of butadiene-acrylonitrile polymer, the use of a sulphur-based vulcanization system and the adhesion improving compound is selected from bis-[3-(triethoxysilyl)-propyl]-tetrasulphide and bis-[triethoxysilyl-ethyltolylene]-tetrasulphide. Another preferred embodiment involves the use in the first rubbery layer of hydrogenated butadiene-acrylonitrile polymer which contains from about 0.1 to about 7, most preferably from about 0.1 to about 1, mole per cent of residual carbon-carbon double bond unsaturation, the use in the second rubbery layer of butadiene-acrylonitrile polymer, the use of an organic peroxide vulcanization system and the adhesion improving compound is selected from bis-[3-(triethoxysilyl)-propyl]-tetrasulphide and bis-[triethoxysilyl-ethyltolylene]-tetrasulphide. Yet another preferred embodiment involves the use in the first rubbery layer of hydrogenated butadiene-acrylonitrile polymer which contains from about 0.1 to about 7, most preferably from about 0.1 to about 1, mole per cent of residual carbon-carbon double bond unsaturation, the use in the second rubbery layer of a fluoroelastomer polymer based on vinylidene fluoride and hexafluoropropylene optionally also containing tetrafluoroethylene, perfluoromethylvinyl ether or ethylenically unsaturated olefins, the use of an organic peroxide vulcanization system and the adhesion improving compound is selected from bis-[3-(triethoxysilyl)-propyl]-tetrasulphide and bis-[triethoxysilyl-ethyltolylene]-tetrasulphide.

Uses for the laminates of my invention include hoses, belts, membranes, linings for vessels and the like.

The following examples illustrate the present invention and all parts are parts by weight unless otherwise specified.

## EXAMPLE 1

This Example illustrates the adhesion of hydrogenated nitrile polymer (HNBR) to nitrile polymer (NBR) when a sulphur-based vulcanization system is used. The HNBR contained 38 weight % acrylonitrile and about 5 mole % of residual carbon-carbon double bond unsaturation and the NBR contained 34 weight % of acrylonitrile. The compounds shown in Table 1 were prepared using a cool (40°C) rubber mill, the polymer first being banded on the mill followed by addition of all components except the vulcanisation active agents followed after mixing by the addition of the vulcanization active agents and further mixing and refining. The vulcanization characteristics for each compound were determined on a rheometer at 160°C using ASTM D2084 procedure and sheets of the compound were vulcanized for 30 minutes at 160°C and the stress strain properties were determined according to ASTM D412 procedure. Laminates were prepared, as hereinbefore described, and tested for adhesion for hydrogenated nitrile polymer - nitrile polymer layers with and without bis[3-triethoxysilyl)-propyl]-tetrasulphide, the results being shown in Table I. The increase in adhesion is readily seen.

## TABLE 1

| Experiment # | | 1 | 2 | 3 |
|---|---|---|---|---|
| **Compound Recipes** | | | | |
| HNBR | | 100 | 100 | - |
| NBR | | - | - | 100 |
| N550 Black | | 50 | 50 | 40 |
| Magnesium oxide | | 3 | 3 | 3 |
| Zinc oxide | | 3 | 3 | 3 |
| Stearic acid | | 1 | 1 | 1 |
| Di(butoxy-ethoxy-ethyl) adipate | | 10 | 10 | - |
| Sulphur | | 0.5 | 0.5 | 0.5 |
| Dibenzothiazyl disulphide | | 1.5 | 1.5 | 1.5 |
| Tetramethyl thiuram disulphide | | 1.5 | 1.5 | - |
| Tetraethyl thiuram disulphide | | - | - | 1.5 |
| Bis[3-triethylsilyl)-propyl]-<br>    tetrasulphide | | - | 2 | - |
| **Rheometer Data** (1° arc, 160°C) | | | | |
| $t_s2$ (min) | | 4.0 | 4.8 | 2.6 |
| t90 (min) | | 10.4 | 14.6 | 6.9 |
| ML (dN.m) | | 3.2 | 4.9 | 6.0 |
| MH (dN.m) | | 42 | 44 | 52.0 |
| **Stress Strain Properties** (cure 30 min at 160°C) | | | | |
| 100% Modulus | (MPa) | 3.4 | 3.1 | 3.2 |
| 200% Modulus | (MPa) | 8.4 | 7.5 | - |
| 300% Modulus | (MPa) | 13.4 | 12.3 | - |
| Tensile strength | (MPa) | 22.4 | 23.8 | 18.4 |
| Elongation | (%) | 510 | 550 | 365 |
| Hardness | (Shore A) | 73 | 74 | 70 |
| **Adhesion Strength** (kN/m) | | | | |
| #1/#3 | | 5.4 | | |
| #2/#3 | | 7.3 | | |

EXAMPLE 2

This Example illustrates the adhesion of hydrogenated nitrile polymer to nitrile polymer when an organic peroxide vulcanization system is used. The compounds shown in Table 2 were prepared, characterized and tested as described in Example 1. For this Example, the HNBR contained 38 weight % of acrylonitrile and about 0.6 mole % of residual carbon-carbon double bond unsaturation. The results in Table 2 show that the HNBR layer containing the tetrasulphide compound had improved adhesion to the NBR layer and a regular HNBR layer.

## TABLE 2

| Experiment # | 1 | 2 | 3 |
|---|---|---|---|
| **Compound Recipes** | | | |
| HNBR | 100 | 100 | – |
| NBR | – | – | 100 |
| N550 Black | 40 | 40 | 40 |
| Magnesium oxide | 5 | 5 | 5 |
| Zinc oxide | 5 | 5 | 5 |
| Stearic acid | 1 | 1 | 1 |
| Octylated diphenyl amine | 1.1 | 1.1 | 1.1 |
| Zinc salt of methyl mercapto-benzimidazole | 0.4 | 0.4 | 0.4 |
| 1,2-Polybutadiene | 6.5 | 6.5 | 2.6 |
| Bis(tert-butylperoxy)-2,5-dimethyl hexane | 10 | 10 | 3 |
| Bis[3-(triethoxysilyl)-propyl]-tetrasulphide | – | 2 | – |
| | | | |
| **Rheometer Data (1° arc, 180°C)** | | | |
| $t_s2$ (min) | 1.2 | 1.9 | 1.4 |
| t90 (min) | 7.2 | 8.4 | 29.6 |
| ML (dN.m) | 5.0 | 3.7 | 4.8 |
| MH (dN.m) | 60.8 | 51.6 | 37.0 |
| | | | |
| **Stress Strain Properties (cure 30 min at 180°C)** | | | |
| 100% Modulus (MPa) | 6.7 | 5.9 | 2.8 |
| 200% Modulus (MPa) | 19.1 | 15.3 | – |
| 300% Modulus (MPa) | – | 23.0 | – |
| Tensile strength (MPa) | 25.8 | 25.6 | 20.6 |
| Elongation (%) | 250 | 350 | 450 |
| Hardness (Shore A) | 77 | 78 | 69 |

**Adhesion Strength (kN/m)**

| | |
|---|---|
| #1/#3 | 8.5 |
| #2/#3 | 12.6 |
| #1/#1 | 5.1 |
| #1#2 | 14.5 |

EXAMPLE 3

This Example illustrates the adhesion of hydrogenated nitrile polymer to a fluoroelastomer polymer when an organic peroxide vulcanization system is used for the HNBR layer and for either an organic peroxide or a bis-phenol vulcanization system is used for the fluoroelastomer polymer layer. The compounds shown in Table 3 were prepared, characterized and tested as described in Example 1. The HNBR used was the same as that used in Example 2. The results in Table 3 show that the HNBR layer containing the tetrasulphide compound had improved adhesion to the fluoroelastomer polymer layer. FKM-1 is a copolymer believed to comprise vinylidene fluoride and hexafluoropropylene. FKM-2 is a copolymer believed to comprise vinylidene fluoride, hexafluoropropylene, tetrafluoroethylene and either perfluoromethyl vinyl ether or ethylenically unsaturated olefin.

## TABLE 3

| Experiment # | 1 | 2 | 3 | 4 |
|---|---|---|---|---|
| **Compound Recipe** | | | | |
| HNBR | 100 | 100 | – | – |
| FKM-1 | – | – | 100 | – |
| FKM-2 | – | – | – | 100 |
| N550 Black | 40 | 40 | – | – |
| N990 Black | – | – | 30 | 30 |
| Magnesium oxide | 5 | 5 | 3 | – |
| Zinc oxide | 5 | 5 | – | – |
| Stearic acid | 1 | 1 | – | – |
| Calcium hydroxide | – | – | 6 | – |
| Carnuba wax | – | – | 1 | – |
| 1,2-Polybutadiene | 6.5 | 6.5 | – | – |
| Octylated diphenyl amine | 1.1 | 1.1 | – | – |
| Zinc salt of methyl mercapto benzimidazole | 0.4 | 0.4 | – | – |
| Bis(tert-butylperoxy)-2,5-dimethyl hexane | 10 | 10 | – | 5 |
| Bisphenol curative-1 | – | – | 2 | – |
| Bisphenol curative-2 | – | – | 6 | – |
| Tri-allyl cyanurate | – | – | – | 8 |
| Bis[3-(triethoxysilyl)-propyl]-tetrasulphide | – | 2 | – | – |

## TABLE 3 - continued

| Rheometer Data (1° arc, 180°C) | 1 | 2 | 3 | 4 |
|---|---|---|---|---|
| $t_s2$ (min) | 1.2 | 1.9 | 3.8 | 0.4 |
| t90 (min) | 7.2 | 8.4 | 7.8 | 3.0 |
| ML (dN.m) | 5.0 | 3.7 | 14.2 | 5.3 |
| MH (dN.m) | 60.8 | 51.6 | 68.2 | 35.0 |

| Stress Strain Properties (cure 30 min at 180°C) | 1 | 2 | 3 | 4 |
|---|---|---|---|---|
| 100% Modulus (MPa) | 6.7 | 5.9 | 5.9 | – |
| 300% Modulus (MPa) | – | 23.0 | – | – |
| Tensile strength (MPa) | 25.8 | 25.6 | 8.7 | – |
| Elongation (%) | 250 | 350 | 170 | – |
| Hardness (Shore A) | 77 | 78 | 79 | – |

| Adhesion strength (kN/m) | |
|---|---|
| #1/#3 | 4.5 |
| #1/#4 | 1.3 |
| #2/#3 | 5.8 |
| #2/#4 | 2.8 |

EXAMPLE 4

Similar experiments were undertaken to determine whether the adhesion improving compound would improve the adhesion of hydrogenated nitrile polymer layers to layers containing brominated butyl rubber, ethylene-propylene-diene monomer polymer or epichlorohydrin polymer. In all cases there was either only a minimal increase in adhesion or no increase in adhesion.

**Claims**

1. A process for improving the adhesion of a first rubbery layer to a second rubbery layer in an at least two layer vulcanized laminate, characterized in that said first rubbery layer contains as the rubbery component hydrogenated butadiene-acrylonitrile polymer and said second rubbery layer contains as the rubbery component a rubber selected from the group consisting of nitrile polymer, hydrogenated nitrile polymer and fluoroelastomer polymer, wherein there is added to said first rubbery layer prior to vulcanization of the layers in contact with each other an adhesion improving compound selected from the group consisting of bis[alkoxysilyl-alky]-tetrasulphide and bis[alkoxysilyl-aryl]-tetrasulphide.

2. The process of Claim 1 wherein the hydrogenated butadiene-acrylonitrile polymer contains not more than 10 mole per cent of carbon-carbon double bond unsaturation.

3. The process of claim 2 wherein the hydrogenated butadiene-acrylonitrile polymer in said first rubbery layer contains from about 1 to about 10, preferably 1 to about 7, mole per cent of carbon-carbon double bond unsaturation, the rubber in said second rubbery layer is butadiene-acrylonitrile polymer, the adhesion improving compound is selected from bis-[3-(triethoxysilyl)-propyl]-tetrasulphide and bis-[triethoxysilyl-ethyltolylene]tetrasulphide and vulcanization is with a sulphur-based system.

4. The process of Claim 2 wherein the hydrogenated butadiene-acrylonitrile polymer in said first rubbery layer contains from about 0.1 to about 7 mole per cent of carbon-carbon double bond unsaturation, the rubber in said second rubbery layer is butadiene-acrylonitrile polymer and vulcanization is with an organic peroxide-based system.

5. The process of Claim 4 wherein the hydrogenated butadiene-acrylontrile polymer contains from about 0.1 to about 1 mole per cent of carbon-carbon double bond unsaturation.

6. The process of Claim 2 wherein the hydrogenated butadiene-acrylonitrile polymer in said first rubbery layer contains from about 0.1 to about 7 mole per cent of carbon-carbon double bond unsaturation, the rubber in said second rubbery layer is a fluoroelastomer polymer based on vinylidene fluoride and hexafluoropropylene optionally also containing tetrafluoroethylene, perfluoromethylvinyl ether or ethylenically unsaturated olefins, the adhesion improving compound is selected from bis-[3-(triethoxysilyl)-propyl]-tetrasulphide and bis-[triethoxysilyl-ethyltolylene]-tetrasulphide and vulcanization is with an organic peroxide-based system for said first rubbery layer and a bis-phenol-based or an organic peroxide-based system for said second rubbery layer.

7. The process of Claim 6 wherein the hydrogenated butadiene-acrylonitrile polymer contains from about 0.1 to about 1 mole per cent of carbon-carbon double bond unsaturation.

8. The process of Claim 2 wherein the hydrogenated butadiene-acrylonitrile polymer in said first rubbery layer contains from about 0.1 to about 7 mole per cent of carbon-carbon double bond unsaturation, the rubber in said second rubbery layer is hydrogenated butadiene-acrylonitrile polymer having from about 0.1 to about 10 mole per cent of carbon-carbon double bond unsaturation, the adhesion improving compound is selected from bis-[3-(triethoxysilyl)-propyl]-tetrasulphide and bis-[triethoxysilyl-ethyltolylene]-tetrasulphide and vulcanization is with an organic peroxide-based system.

9. The process of Claim 8 wherein the hydrogenated butadiene-acrylonitrile polymer in said first rubbery layer contains from about 0.1 to about 1 mole per cent of carbon-carbon double bond unsaturation, and in said second rubbery layer contains from about 0,1 to about 7 mole per cent of carbon-carbon double bond unsaturation.

10. The process of Claim 9 wherein the hydrogenated butadiene-acrylonitrile polymer in said second rubbery layer contains from about 0.1 to about 1 mole per cent of carbon-carbon double bond unsaturation.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 089 162 (POLYSAR LIMITED) * page 1, line 16 - line 21; claims 1,9 * | 1-10 | C08K5/54 B32B25/14 |
| D | & US-A-4 457 799 | | |
| D | & US-A-4 522 852 | | |
| A | EP-A-0 199 226 (BAYER AG) * claims 1,3 * | 4-5 | |
| A | EP-A-0 112 109 (POLYSAR LIMITED) * claims 1,5 * | 3 | |
| A | CENTRAL PATENTS INDEX, BASIC ABSTRACTS JOURNAL Section Ch, Week 2389, 2 August 1989 Derwent Publications Ltd., London, GB; Class A, AN 89-169232 & JP-A-1 110 141 (NIPPON ZEON KK) 26 April 1989 * abstract * | 6 | |

TECHNICAL FIELDS SEARCHED (Int. Cl.5)

C08K
B32B
C08J

The present search report has been drawn up for all claims

| Place of search | Date of completion of the search | Examiner |
|---|---|---|
| THE HAGUE | 26 MARCH 1993 | VAN HUMBEECK F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)